# EUROPEAN PATENT SPECIFICATION

(11) **EP 3 830 841 B1**
(45) Date of publication and mention of the grant of the patent: **27.09.2023**
(21) Application number: 18748917.4
(22) Date of filing: 31.07.2018
(51) Int. Cl.: G21G 1/02, H05H 6/00

(54) **CARTRIDGE AND USE OF THE CARTRIDGE IN A METHOD OF PRODUCING RADIOISOTOPES**
PATRONE UND VERWENDUNG DER PATRONE IN EINEM VERFAHREN ZUR HERSTELLUNG VON RADIOISOTOPEN
CARTOUCHE ET UTILISATION DE LA CARTOUCHE DANS UN PROCÉDÉ DE PRODUCTION DE RADIO-ISOTOPES

(43) Date of publication of application: 09.06.2021
(73) Proprietor: Framatome GmbH, 91052 Erlangen (DE)
(72) Inventor: RICHTER, Thomas Fabian, 91052 Erlangen (DE); SYKORA, Alexander, 91052 Erlangen (DE)
(74) Representative: Lavoix
(86) International application number: PCT/EP2018/070809
(87) International publication number: WO 2020/025120

(56) References cited:
- WO-A1-2016/207054
- FR-A1- 2 647 945
- GB-A- 1 085 640

## Description

### FIELD OF THE INVENTION

The invention is directed to a cartridge for use as an irradiation target and a method of producing radioisotopes in a heavy water type nuclear power plant using said cartridge.

### BACKGROUND OF THE INVENTION

Radioisotopes are used in various fields of technology and science, as well as for medical purposes. Usually, radioisotopes are produced in research reactors or cyclotrons. However, since the number of facilities for commercial production of radioisotopes is limited already and expected to decrease, it is desired to provide alternative production sites.

WO 2016/207054 A1 discloses a method of producing radioisotopes using a heavy water type nuclear power plant. The method includes inserting targets into a heavy water moderator of the heavy water reactor through a double-walled guide tube which is arranged a port of the heavy water reactor, such as a view port or Neutron Flux Monitor tubes (spares) in a reactivity mechanism deck. The heavy water reactor operates to irradiate the targets to convert the targets into a radioisotope. The method then includes removing the radioisotope from the moderator of the heavy water reactor via the reactivity mechanism deck using a pneumatic drive system.

WO 2016/173664 A1 shows a method of producing radioisotopes from irradiation targets in a nuclear reactor using at least one instrumentation tube system of a commercial nuclear reactor. Irradiation targets and dummy targets are inserted into an instrumentation finger and the irradiation targets are activated by exposing them to neutron flux in the nuclear reactor core to form a desired radioisotope. The dummy targets hold the irradiation targets at a predetermined axial position in the reactor core corresponding to a pre-calculated neutron flux density sufficient for converting the irradiation targets to the radioisotope. A step of separating the dummy targets from the activated irradiation targets includes exposing the dummy targets and/or the activated irradiation targets to a magnetic field to retain either the dummy targets or the activated irradiation targets in the instrumentation tube system and release the other one of the activated irradiation targets or the dummy targets from the instrumentation tube system.

WO 2017/012655 A1 discloses a method for harvesting activated irradiation targets from an instrumentation tube system of a nuclear reactor. The method comprises the steps of coupling the instrumentation tube system to a discharge tube having an apex, an exit port and a lock element between the apex and the exit port; passing the activated irradiation targets from the instrumentation tube system into the discharge tube and blocking movement of the activated irradiation targets out of the discharge tube by means of the lock element; separating a predefined quantity of the activated irradiated targets from another quantity of the targets in the discharge tube; coupling the exit port to a storage container and releasing the lock element to pass the predefined quantity of the activated irradiation targets under action of gravity into the storage container; wherein said separating step comprises passing the predefined quantity of the activated irradiation targets over the apex and retaining the other quantity of the targets in the discharge tube by means of the apex.

US 2013/0177118 A1 discloses a system that allows irradiation targets to be irradiated in a nuclear reactor and deposited in a harvestable configuration without direct human interaction or discontinuation of power-producing activities. The system includes accessible end-points that store desired produced isotopes for handling and/or shipping. A cask tube is provided for use with multiple storage casks based on target properties. One or more stops may be inserted into the cask tube at desired positions to separate out a certain population of irradiation targets. In a specific embodiment, two stops are provided at a distance d that corresponds to a length of leader spheres used in an example embodiment system. The leader spheres may then be emptied out of the cask tube via gravity or pneumatic force into a separate cask or other facility.

US 2013/0170927 A1 discloses apparatuses and methods for producing radioisotopes in instrumentation tubes of operating commercial nuclear reactors. Irradiation targets are inserted and removed from instrumentation tubes during operation and converted to radioisotopes. A harvesting station may be located outside of an access-restricted area to permit access for refilling or harvesting the targets during plant operation. A harvesting cask and/or cask tube can be equipped with a target counter that counts or measures properties of irradiation targets moving into the harvesting cask. For example, the target counter may count a number of discrete irradiated targets that pass into the harvesting cask, using an optical or magnetic counter capable of counting each irradiated target.

US 2013/0315361 A1 relates to apparatuses and methods for producing radioisotopes in multiple instrumentation tubes of operating commercial nuclear reactors. Irradiation targets are inserted and removed from multiple instrumentation tubes and converted to radioisotopes during operation of the nuclear reactor. Positioning irradiation targets are used to properly position other irradiation targets at desired positions within or near the nuclear core. The positioning targets may be sorted out from the harvesting cask due to their markings or physical (magnetic) properties.

US 2013/077725 A1 discloses an irradiation target encapsulation assembly, including a container, at least one first irradiation target disposed in the container, at least one second irradiation target disposed in the container, and a positioning structure configured to position the first irradiation target closer to an axial center of the container than the second irradiation target.

EP 2 242 062 A2 is directed to a capsule (1) for holding, irradiating, and eluting a material. The capsule may include a multidiameter tube with a first end region, a second end region, and a middle region. Washers and filters are provided in the end regions and the end regions may be sealed using various methods and materials with the end caps press fit into the end regions. The middle region is designed to store a material to be irradiated by a neutron flux source. The capsule components may be made from materials having a low nuclear cross section so that the capsule may be handled safely after an irradiation step is performed. The capsule is also designed to have a symmetric configuration as an elution and irradiation column so that the same capsule may be used to elute the material within the middle region of the capsule after an irradiation step is performed.

GB 1 085 640 A describes a process for producing iodine 131.

While various suggestions exist for producing radioisotopes in a commercial nuclear reactor during power operation, all of the proposed solutions require costly modifications of the reactor design.

### SUMMARY OF THE INVENTION

It is an object of the invention to provide a processing and harvesting system for radioisotopes produced in the heavy water moderator of a heavy water reactor which allows for an easy handling of the irradiation targets and which can be installed subsequently into existing reactor structures.

In order to solve this object, the invention provides a cartridge according to claim 1.

The invention further provides a method of producing radioisotopes according to claim 11.

The inventors found that the view port, the Neutron Flux monitor tubes (spares) or another spare port of a commercial heavy water reactor, such as a CANDU reactor, provides advantages over the instrumentation systems of other commercial nuclear reactors when used for producing radioisotopes during power operation, due to less restricted space requirements. In particular, a guide tube comprising a double-walled tube arrangement can be installed in the view port or other spare ports and used for delivering and retrieving irradiation targets to and from the heavy water moderator of a heavy water reactor via a pneumatic system. The guide tube is preferably installed in the view port and includes a gas permeable stop for the transport cartridges, wherein the stop is located at an area within the heavy water moderator where the neutron flux is sufficient to achieve an optimum activation of the targets. The guide tube can be sealed to the thimble bearing in the view port in a gas-tight manner. In addition, activation of the targets in the moderator of a heavy water reactor enables the use of materials which are less temperature sensitive than materials for insertion into the reactor core of other nuclear plants.

According to the invention, the irradiation targets are designed in the form of a transport cartridge. The cartridge is adapted for use with the usual glass ampoules provided by the pharmaceutical industry to handle radioisotopes for medical purposes. The shock absorbing material within the cartridge guarantees that the sealed ampoule within the cartridge can withstand the loads during delivering and retrieving irradiation targets to and from the heavy water moderator using a pneumatic transport system.

Thus, the parent material of the radioisotopes can be activated within a cartridge, without the need of being formed into a ceramic ball or cylinder. The pharmaceutical industry may therefore continue using its quality-certified processes without any further amendments. In the nuclear power plant, no additional pharmaceutical regulations have to be observed, as the radioisotope is always sealed in an ampoule. No contamination of the targets can take place. Release of free radioisotopes due to operating errors is also virtually impossible. The costs of target activation are reduced and, after activation, the activated targets can be transported directly from the reactor core into the storage container without the use of a hot cell.

The pneumatic transport system can be designed to transport the cartridges directly into storage containers. This means that no further packing step in hot cells or the like is necessary. Preferably, he transport system includes a transport pipe and a gas pipe which run from the reactor core or moderator directly to a discharge unit. The discharge unit of the transport system is adapted to provide a portioning of the activated targets. This allows for safe handling and controlling the number of the target transferred into the storage container.

Preferably, a radiation detector is installed on the discharge unit of the transport system to measure the activity during ejection and registration of the targets. The discharge unit also includes certain locks and valve arrangements to allow for a controlled ejection of the activated targets.

According to the invention, the housing of the cartridge or irradiation target is made from a plastic material, preferably selected from the group consisting of polyethylene, polyether ether ketone (PEEK), polyurethane, polyamide, polycarbonate or polypropylene. Preferred plastic materials are polyethylene and PEEK.

Preferably, the cartridge comprises a beryllium liner or coating, which allows for additional moderation or multiplication of neutrons.

More preferably, the ampoule is a sealed glass ampoule, but can be made of any other material which is provided by the pharmaceutical industry to encapsulate medical radioisotopes.

The shock absorbing material preferably comprises a filling of an insulating material, more preferably foam or fiber materials, and in particular expanded polystyrene foam, urea-formaldehyde foam, polyurethane foam, rubber foam, glass wool, mineral wool, cellulose fibers and other natural fibers, fiberglass fills, or combinations thereof. Preferred insulating materials are polystyrene foam and mineral wool or glass wool.

The shock absorbing material may further comprises a flexible structure of made of an elastic material located adjacent opposing ends of the ampoule. Preferably, the flexible structure is provided with a center hole for receiving and a front end or a rear end of the ampule. Thus, the ampoule is safely wrapped by the insulating material and/or secured in place by the flexible structure so that no damage will occur to the ampoule during transportation via the pneumatic system.

According to a further preferred embodiment, the cartridge further includes a magnetic material or coating. Providing magnetic cartridges may facilitate the portioning operation in the discharge unit of the radioisotope generation system.

Preferably, the housing of the cartridge has a first part and a second part detachably attached to each other, preferably by mating inner and outer threads arranged on the first and second housing part. This would allow an easy handling and removal of the ampoule including the radioisotope. Alternatively, the first and second part of the housing can be plugged together and securely hold to each other by way of friction, only.

In the method of producing radioisotopes in a heavy water nuclear reactor, the step of discharging the activated irradiation targets preferably includes keeping at least one of the activated targets, more preferably exactly one activated irradiation target within a lock mechanism to separate the at least one target, preferably the one target, from the reminder of the targets and eject the at least one targets, preferably the one target into the storage container.

Further, the step of discharging the activated irradiation targets preferably comprises using a radiation detector to determine absence or presence of an activated irradiation target in the lock mechanism and controlling operation of the lock mechanism.

### BRIEF DESCRIPTION OF THE DRAWINGS

The present invention is described below by reference to the following drawings, in which:
Fig. 1 shows a schematic view of the cartridge for use as an irradiation target in accordance with the present invention;
Fig. 2 shows a schematic view of a radioisotope production system used in the present invention; and
Fig. 3 shows a schematic view of a discharge unit of the radioisotope production system for use in the present invention.

### DETAILED DESCRIPTION OF THE INVENTION

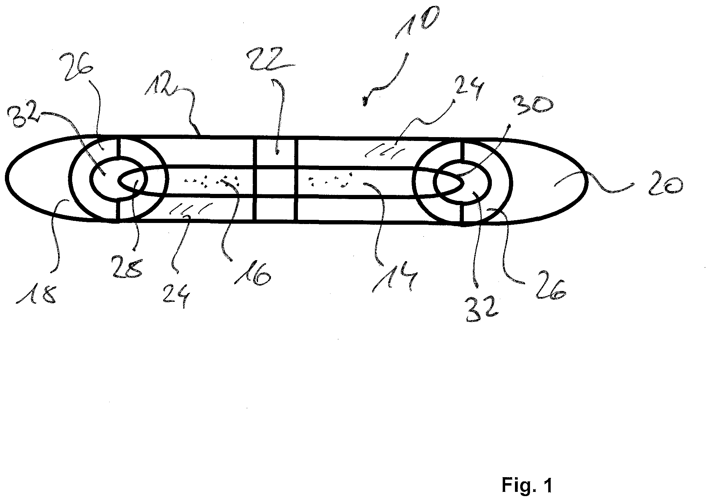

Referring to Fig. 1, a cartridge for use as an irradiation target 10 comprises a housing 12 and a sealed ampoule 14 included in said housing 12. The housing 12 is made of a plastic material which is found appropriate by the reactor operator to be inserted into the core. Preferably, the material is neutron moderating and non - neutron-absorbing. The ampoule 14 contains a parent material 16 which on activation by neutron flux converts into a radioisotope.

The housing 12 has a first part 18 and a second part 20 which are provided with mating threads so that the first and second housing part 18, 20 can be threaded to each other. The threads can be inserted into a ring 22, which can be magnetic, or the ring 22 can be provided with an internal thread to engage with mating outer threads provided on the first and second housing part 18, 20. The housing 12 can therefore easily be opened and closed to insert or remove the ampoule 14 including the parent material 16 or radioisotope. Alternatively, one of the first and second part 18, 20 of the housing 12 can be provided with an projecting section (not shown) having an outer diameter slightly less or corresponding to the inner diameter of the other of the first or second housing part 18, 20. The housing parts 18, 20 can then be plugged together and securely hold to each other by way of friction, only. Preferably, the projecting section is tapered so that insertion into the other housing part is facilitated. A magnetic ring 22 may also be attached to the projecting section.

The housing 12 is made from a plastic material which is preferably suitable to withstand the conditions in the moderator of a heavy water reactor. Examples for the plastic material are polyethylene, polyether ether ketone (PEEK), polyurethane, polyamide, polycarbonate or polypropylene. Preferably, the housing 12 is made from polyethylene or PEEK. In addition, the housing 12 can be provided with a beryllium liner or coating, which allows for additional moderation or multiplication of neutrons.

In the embodiment shown in Fig. 1, the ampoule 14 is a sealed glass ampoule. It is however understood that the material of the ampoule 14 is not limited to glass, but can be made of any other material and provided in any other shape which is found appropriate by the pharmaceutical industry to encapsulate medical radioisotopes.

The ampoule 14 is kept within the housing 12 by means of a shock absorbing material 24 surrounding the ampoule 14. The shock absorbing material 24 preferably comprises a filling of an insulating material, more preferably a foam or fiber material. Examples for the shock absorbing material 24 are polystyrene foam, urea foam, urea-formaldehyde foam, polyurethane foam, rubber foam, synthetic fibers such as glass wool, mineral wool and fiberglass fills, natural fibers such as cellulose fibers, cotton fibers and rice hulls, or combinations thereof. Preferred insulating materials are polystyrene foam and mineral wool or glass wool.

Alternatively, or in addition to the insulating material surrounding the ampoule 14, the shock absorbing material 24 may comprise a flexible structure 26 made of an elastic material which is located adjacent opposing end faces 28, 30 of the ampoule 14. The flexible structure 26 is secured at opposite ends in the housing 12 and is provided with a center hole 32 for receiving and the front end 28 or the rear end 30 of the ampoule 14. Thus, the ampoule 14 is safely wrapped by the insulating material and/or secured in place by the flexible structure 26 so that no damage will occur to the ampoule 14 during transportation via a pneumatic system or activation in the reactor core.

The above described cartridge is used as an irradiation target 10 in a method of producing radioisotopes in a heavy water nuclear reactor. The cartridge has a substantially cylindrical shape with rounded end faces so as to facilitate transportation in the guide tube of a radioisotope production system. To facilitate the transport in curves the cartridge is equipped at both sides with a circumferential tie. Typical dimension of the cartridge for use as an irradiation target are a length of about 70-90 mm and an outer diameter of 10 to 15 mm. The ampoule 14 preferably has a length of about 40 to 60 mm and an outer diameter of about 6 to 10 mm. The dimensions of the cartridge are selected such that the ampoule 14 can be safely kept within the cartridge, and that the cartridge can pass through the guide tube in the reactor core.

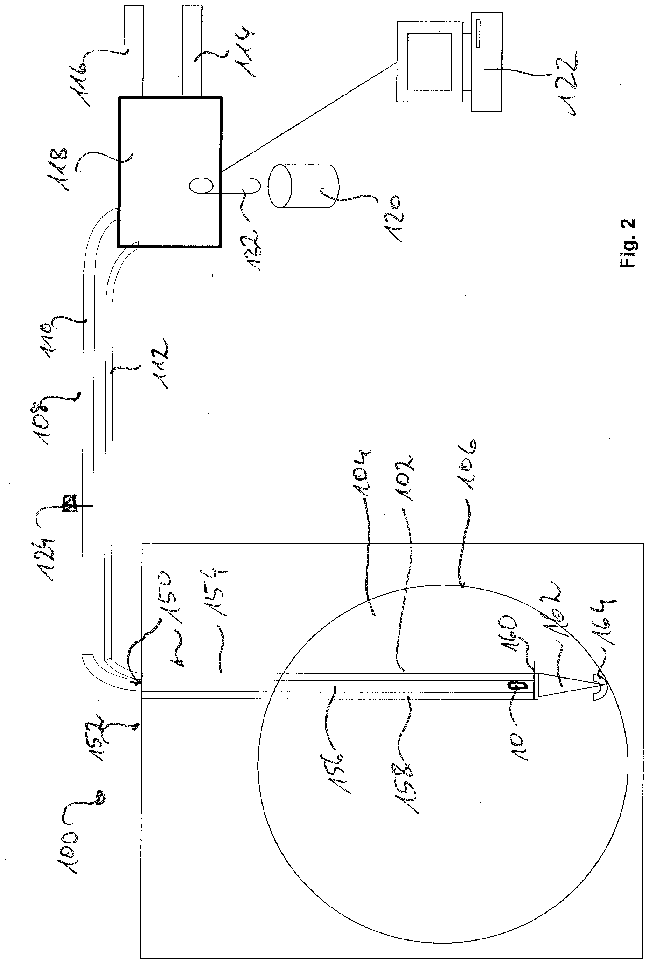

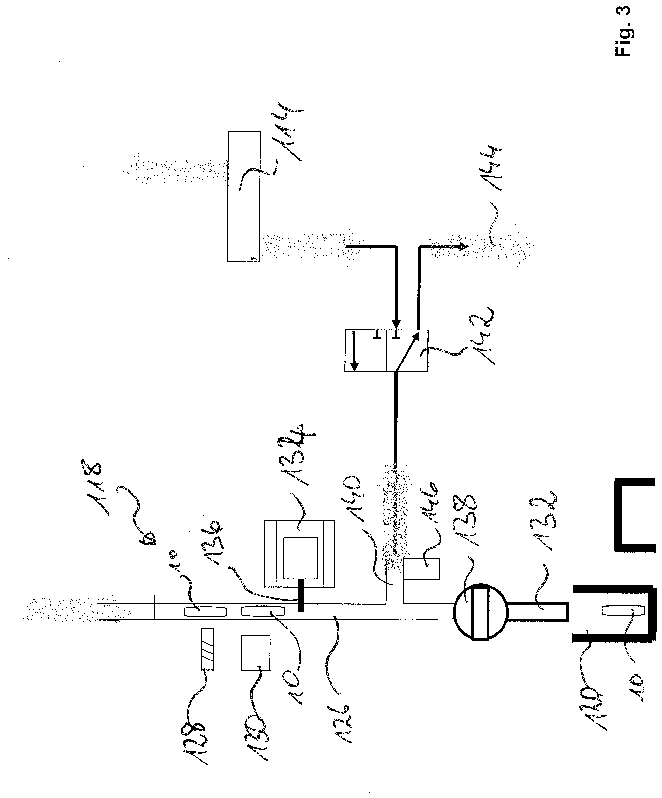

Referring to Fig. 2, a system 100 to produce radioisotopes in a commercial heavy water reactor during power operation generally comprises:
an guide tube 102 passing through a moderator 104 in the calandria 106 of the heavy water nuclear reactor wherein the guide tube 102 is configured to permit insertion and removal of irradiation targets 10 into and from the guide tube 102;
a target transport system 108 configured to insert the irradiation targets 10 into the guide tube 102 and to drive the irradiation targets 10 out of the guide tube 102, wherein the transport system comprises a transport pipe 110 and a gas pipe 112 connected to the guide tube 102, a gas supply 114 for driving the irradiation targets 10 into and out of the transport pipe 110 and the guide tube 102 via pneumatic action, and an exhaust gas system 116 to discharge the transport gas from the transport system 108;
a target discharge unit 118 configured to retrieve the irradiation targets 10 from guide tube 102 and including a separator arrangement (Fig. 3) for separating the irradiation targets 10 from each other and eject the irradiation targets 10 into a storage container 120.
a transport system control unit 122 linked to the components of the radioisotope production system for controlling the operation of the target transport system 108 and target discharge unit 118, and which may further be configured to calculate an irradiation time for the irradiation targets 10 based on the actual state of the nuclear reactor as provided by a core monitoring system.

The transport pipe 110 may be provided with a stop, such as magnetic lock 124, for defining a decay position for the irradiation targets 10 outside the reactor core.

The target discharge unit 118 is shown in greater detail in Fig. 3. A discharge tube 126 is attached to the transport pipe 110, for example by means of a threaded connection. Thus, the target discharge unit 118 can be removed and replaced by a target filling device (not shown). The filling device may be portable and attached to the transport pipe 110 on an as needed basis, for feeding the irradiation targets 10 into the transport pipe 110. Then the gas supply 114 including a standard commercially available pneumatic tank with commercially available fittings may be connected to the transport pipe 110 and used to supply gas into the transport pipe 110 to ensure that the irradiation targets 10 are fully inserted.

A first lock element 128 is arranged at the discharge tube 126 upstream of a radiation detector 130, when viewed from the reactor core towards an outlet 132 of the target discharge unit 118. Preferably, the first lock element 128 is a magnet or solenoid or a magnetically operated lock element, and most preferably the first magnet or solenoid is movable along a longitudinal axis of the discharge tube 126. The magnet or solenoid is configured to hold and retain magnetic irradiation targets 10 in the discharge tube 126. If non-magnetic irradiation targets 10 are used to produce radioisotopes, the magnet can be replaced by a mechanical lock element, such as a spring-loaded or pneumatically operated lock element.

A second lock element 134 is arranged at the discharge tube 126 downstream of the first lock element 128 and the radiation detector 130. The second lock element 134 is configured to block the irradiation targets 10 flowing out of the discharge tube 126 into a storage container 120. Preferably, the second lock element 134 comprises a magnetic lock including a retainer means such as a pin 136 crossing the discharge tube 126 so that the irradiation targets 10 are retained in the discharge tube 126 until the magnetic lock activated. Alternatively, the second lock element 134 can be a mechanical lock element, such as a spring-loaded or pneumatically operated lock element.

The first and second lock elements 128, 134 are arranged at a distance to each other so that a predefined quantity of irradiation targets is kept between the first and second lock elements 128, 134. Preferably, the predefined quantity corresponds to exactly one irradiation target 10. The first and second lock elements 128, 134 thus constitute a separator arrangement for the irradiation targets 10.

The first and second lock elements 128, 134 can be remotely controlled by the transport system control t unit 122 in response to the radiation detector 130 determining the absence or presence of one or more irradiation target 10 between the first lock element 128 and the second lock element 134 so that an automatic and fast processing of the irradiation targets 10 is achieved.

As further shown in Fig. 3, a motor valve 138 is arranged proximate to the outlet 132 of the discharge tube 126 so that the discharge tube 126 can be selectively opened and closed for target ejection. The outlet 132 is detachably connected to a storage container 120 to receive a selected number of irradiation targets 10 ejected from the discharge tube 126.

A gas supply tube 140 is attached to the discharge tube 126 upstream of the motor valve 138 and downstream of the separator arrangement comprising the first lock element 128 and the second lock element 134. The gas supply tube 140 is linked to a valve battery 142 of the target transport system and the gas supply 114 for pressurized gas, such as nitrogen or air, so that pressurized gas can be supplied either to the transport pipe 110 for inserting the irradiation targets 10 into the guide tube 102 in the reactor core, or to the gas pipe 112 for retrieving the activated irradiation targets 10 from the guide tube 102 and/or transporting the targets into the target discharge unit 118. Surplus gas as indicated by arrow 144 is discharged from the target discharge unit 118 via the exhaust gas system 116.

The gas supply tube 140 may also comprise a leakage detector and/or a pressure detector 146 so as enable control of the pneumatic transport system by means of the transport system control unit 122.

Heavy water type nuclear power plants, specifically CANDU pressurized heavy water reactors, have a very high thermal neutron flux and a high level epi-thermal neutron flux over a wide range of resonance that is capable of activating non-uranium based targets with neutron capture. Such neutron capture considerably reduces the waste created to obtain the radioisotopes as well has the capability to produce significant amounts of radioisotopes such as Mo-99 to replace production from aging research reactors as they are retired.

The present disclosure provides a system and method of inserting and retrieving targets into and from a heavy water type nuclear power plant that can be done during the operation of the plant without significant impact to the operational risk. A guide tube 102 is provided into the moderator 104, an area that is outside the pressure tubes of the primary coolant loop and that is separated from the fuel bundles.

A detailed description of a CANDU pressurized heavy water reactor is found in WO 2016/207054 A1 which is included herewith by reference. The typical heavy water reactor assembly has separate pressure boundaries categorized as the primary cooling loop (not shown) where the fuel is contained, the moderator 104 that slows the neutrons which is a separate system, isolated from the primary cooling loop and the end shield which provide radiation shielding and supports the primary cooling loop fuel channels.

Referring again to Fig. 2, the moderator components comprise the calandria 106 and the heavy water moderator 104 flowing into and out of the volume inside calandria 106. A view port 150 extends from a reactivity mechanisms deck 152 to the calandria 106 and is secured to the calandria 106 by means of a calandria nozzle (not shown). View ports 150 are used during the periodic inspection to monitor corrosion and wear of the reactor at two regions exposed to different levels of neutron flux. An existing thimble 154 is in place in the view port 150 to allow insertion and attachment of a guide tube 102 for radioisotope production.

While the description refers to a view port 150 included in the reactivity mechanisms deck 152, it is to be understood that other horizontally or vertically extending spare ports in calandria 106 may also be used in the present invention.

The guide tube 102 used for radioisotope production comprises a double-walled tube arrangement defining an inner target tube 156 and an outer pressure boundary tube 158 separated from and surrounding the inner target tube 156. The target tube 156 is connected to the transport pipe 110 and the pressure boundary tube 158 is connected to the gas pipe 112 of the target transport system 108, for example by means of a distributor (not shown), at the view port 150 in the reactivity mechanisms desk 152. The guide tube 102 may be formed of a zirconium alloy or of stainless steel.

Irradiation targets 10 are inserted into the inner target tube 156 through the transport pipe 110 via pneumatic action, and are hold in place in the reactor core by means of a gas-permeable stop 160 in the lower part of the inner target tube 156. The gas-permeable stop 160 is located in an area of the moderator 104 having high neutron flux to ensure activating the targets within a reasonable time. The bottom of the guide tube 102 has a guide tip 162 to allow positioning within the calandria 106 by means of a locator 164. The guide tube 102 can be approximately 14 meters in length and 8 to 10 centimeters in diameter.

The irradiation targets go down through the transport pipe 110 into the view port 150 and into inner target tube 156 by pneumatic pressure pushing the targets down until they stop at the bottom of the inner target tube 156 by hitting the gas permeable stop 160. The stop 160 has gaps to allow pneumatic pressure to easily pass through stop 160 in both upward and downward directions. After the activation period, the pneumatic pressure is reversed by applying the pneumatic pressure on the gas pipe 112 down the pressure boundary tube 158 and then comes back up the inner target tube 156 from the bottom, past the gas-permeable stop 160 and pushes the activated targets 10 through the inner target tube 156 and up and out into the transport pipe 110.

It is understood that the outer diameters of the targets 10 define the inner diameter of the inner target tube 156 with a clearance to allow ease of movement of the targets. The outer diameter of the inner target tube 156 in turn defines the inner diameter of the pressure boundary tube 158, with a radial gap being present between inner target tube 156 and pressure boundary tube 158 to allow gas to flow down in the axial direction between inner target tube 156 and pressure boundary tube 158. In a preferred embodiment, the guide tube 102 itself may form the pressure boundary tube 158.

In the method of the present invention, the cartridge as defined above is used as an irradiation target 10 for producing radioisotopes in a heavy water nuclear reactor.

According to the method, one or more irradiation targets 10 are inserted into the guide tube 102 and activated in the moderator 104 of the nuclear reactor by exposing the irradiation targets 10 to a neutron flux and converting the parent material 16 in the irradiation targets 10 into a radioisotope, to form one or more activated irradiation targets 10 . The activated irradiation target 10 are then retrieved from the guide tube 102 and discharged to a storage container 120 which may be a commercially available shipping flask for radioactive material.

The step of the inserting the one or more irradiation targets 10 into the guide tube 102 and retrieving the one or more activated irradiation targets 10 from said guide tube 102 is carried out using a pneumatic drive system including gas supply 114, and the step of discharging the irradiation targets 10 into the storage container 120 includes separating a portion of said one or more activated irradiation targets 10 and discharging only said portion of said one or more irradiation targets 10 into the storage container 120.

For operating the radioisotope production system, one or more cartridges including a parent material 16 for the radioisotopes are transferred into the reactor core via a filling device (not shown) connected to the transport pipe 110. A pressurized gas, such as nitrogen or air, is supplied from gas supply 114 to the transport pipe 110 so that the cartridges go from the transport pipe 110 through the inner target tube 156 in the guide tube 102 until they hit the permeable gas stop 160. In a preferred embodiment, the target discharge unit 118 is connected to the transport pipe 110 and used to supply the pressurized gas via gas supply tube 140. The exhaust air can escape through the gas pipe 112 into the exhaust system 116 connected to the target discharge unit 118 and/or the gas pipe 112.

As soon as the cartridges have arrived in the reactor core (end of blowing time), the system is run without pressure. The irradiation targets 10 are then activated in the heavy water moderator 104.

If the parent material 16 is Mo-98 the activation time required to convert the material into Mo-99 is approximately one week. Other parent materials 16 may also be used but will require different activation times. For example, Lutetium-177 (Lu-177) may be produced from ytterbium-176 (Yb-176).

After the activation period has passed, a transport gas is supplied through the gas pipe 112 for retrieving the activated targets 10 from the reactor core and transporting them out of the inner target tube 156 to the target discharge unit 118 via the transport pipe 110. The gas pressure reaches the cartridges via the pressure boundary tube 158 surrounding the inner target tube 156, and the gas-permeable stop 160.

The cartridges can then be conveyed up to the magnetic lock 124 arranged at the transport pipe 110 defining a decay position for the activated radioisotopes. The magnetic lock 124 can be closed to provide a stop for the activated targets 10. Depending on the radioisotope produced, the activated targets 10 are optionally parked at the decay position for a predetermined time, e.g. 24 hours, until short-lived radionuclides have decomposed.

After the decay period has passed, the gas supply through the gas pipe 112 is again activated, and the activated targets 10 are conveyed into target discharge unit 118 by pneumatic action. At this time, the motor valve 138 and the second lock element 134 are in a closed positon so that no activated targets 10 can pass the outlet 132.

The radiation sensor 130 detects the activated targets 10 arrived at the second lock element 134.

The system is then run without pressure, and the second lock element 134 is operated to go into a closed position and keep a predefined quantity of activated targets 10 between the first and second lock elements 128, 134. Thus the cartridges or activated targets 10 upstream of the first lock element 128 are blocked and cannot pass beyond the first lock element 128, and the quantity of activated targets 10 is separated from the remainder of the activated targets 10 upstream of the first lock element 128. In a preferred embodiment, the quantity of activated targets 10 corresponds to exactly one target or cartridge.

The motor valve 138 at the discharge unit 118 is then opened, and the second lock element 134 is driven into an open position so that the cartridges or activated targets 10 can pass the outlet 132 and slide into the storage container 120 by the action of gravity.

The radiation detector 130 shows that the cartridge is no longer in the discharge tube 126.

The second lock element 134 is then closed, and the first lock element 128 is opened to allow for the next quantity of activated targets 10 to slide into the space between the first and second lock elements 128, 134. The discharge process is then repeated by closing the first lock element 128 and ejecting the separated targets into the storage container 120.

Once the storage capacity of the storage container 120 is exhausted, or the desired quantity of activated targets 10 is loaded into the storage container 120, the motor valve 138 and the second lock element 134 are closed. The first lock element 128 is already in a closed position so that the separator arrangement is deactivated.

The radiation detector 130 shows that no cartridges are in the discharge tube 126 between the first and second lock elements 128, 134. The remaining cartridges arranged upstream of the first lock element 128 are then blown towards the reactor core by supplying gas through the gas supply tube 140 at the discharge tube 126 until they hit the closed magnetic stop 124 at the decay position. The activated targets 10 are retained at the decay position to minimize the operator's dose at the storage container 120.

The storage container 120 filled with activated targets 10 can then be removed and replaced by a new empty container 120. The filled storage container 120 can directly prepared for shipment to a customer without requiring further processing. The discharge process is then repeated to eject the next predefined number of cartridges.

The radionuclide generation system can be installed in any heavy water nuclear power plant having conventional instrumentation spare ports or view ports 150. Using the cartridges as defined above, the activated irradiation targets 10 do not require additional processing. Rather, sealed ampoules 14 or other encapsulation directly provided by the pharmaceutical industry can be included in the cartridges.

In the preceding specification, the invention has been described with reference to specific exemplary embodiments and examples thereof. It will, however, be evident that various modifications and changes may be made thereto without departing from the broader scope of invention as set forth in the claims that follow. The specification and drawings are accordingly to be regarded in an illustrative manner rather than a restrictive sense.

## Claims

1. A cartridge (10) for use as an irradiation target, wherein the cartridge (10) comprises a housing (12) and a sealed ampoule (14) included in said housing (12), wherein the ampoule (14) contains a parent material which on activation by neutron flux converts into a radioisotope, and wherein that ampoule (14) is kept within said housing (12) by means of a shock absorbing material (24), **characterized in that** the housing (12) is made of a plastic material.

2. The cartridge (10) of claim 1, wherein the housing (12) is made of a plastic material selected from the group consisting of polyethylene, polyether ether ketone (PEEK), polyurethane, polyamide, polycarbonate or polypropylene, more preferably polyethylene or PEEK.

3. The cartridge (10) of claim 1 or 2, wherein the cartridge (10) comprises a beryllium liner or coating.

4. The cartridge (10) of any one of the preceding claims, wherein the ampoule (14) is a sealed glass ampoule.

5. The cartridge (10) of any one of the preceding claims, wherein the shock absorbing material (24) comprises an insulating material, preferably a foam or fiber material.

6. The cartridge (10) of claim 5, wherein the insulating material comprises expanded polystyrene foam, urea-formaldehyde foam, polyurethane foam, rubber foam, glass wool, mineral wool, cellulose fibers and other natural fibers, fiberglass fills, or combinations thereof.

7. The cartridge (10) of any one of the preceding claims, wherein the shock absorbing material (24) comprises a flexible structure (26) of made of an elastic material located adjacent opposing ends of the ampoule (14).

8. The cartridge (10) of claim 7, wherein the flexible structure (26) is provided with a center hole (32) for receiving a front end (28) or a rear end (30) of the ampoule (14).

9. The cartridge (10) of any one of the preceding claims, wherein the cartridge (10) further includes a magnetic material or coating.

10. The cartridge (10) of any one of the preceding claims, wherein the housing (12) has a first part (18) and a second part (20) detachably attached to each other.

11. A method of producing radioisotopes in a heavy water nuclear reactor from an irradiation target, wherein the irradiation target is provided in the form of a cartridge (10) as claimed in any one of claims 1 to 10, wherein the method comprises the steps of:
providing at least one guide tube (102) passing through a moderator (104) in the core of the nuclear reactor;
inserting one or more of the irradiation targets into the guide tube (102) and activating the irradiation targets by exposing the irradiation target to a neutron flux in the moderator (104) of the nuclear reactor and converting the parent material in the irradiation targets into a radioisotope, to form one or more activated irradiation targets;
retrieving the activated irradiation target from the guide tube (102); and
discharging the one or more activated irradiation targets into a storage container (120);
wherein the step of the inserting the one or more irradiation targets into the guide tube (102) and retrieving the one or more activated irradiation targets from said guide tube (102) is carried out using a pneumatic drive system, and wherein the step of discharging the irradiation targets into the storage container (120) includes separating a portion of said one or more activated irradiation targets and discharging only said portion of said one or more irradiation targets into the storage container (120).

12. The method of claim 11, wherein the step of discharging the activated irradiation targets includes keeping at least one of the activated targets, more preferably exactly one activated irradiation target, in a separator arrangement to separate the at least one target, preferably the one target, from the reminder of the targets and eject the at least one targets, preferably the one target into the storage container.

13. The method of claim 12, wherein the separator arrangement comprises a first and second lock element arranged in a predetermined distance to each other, wherein the first and second lock element are selected from the group of a magnet or solenoid, a magnetically operated lock, a pneumatically operated lock and/or a mechanically operated lock.

14. The method of any one of claims 11 to 13, wherein a radiation detector (130) is installed on the discharge unit, and wherein the step of discharging the activated irradiation targets comprises determining an absence or presence of an activated irradiation target in the separator arrangement by means of the radiation detector (130).

## Patentansprüche

1. Patrone (10) zur Verwendung als Bestrahlungsziel, wobei die Patrone (10) ein Gehäuse (12) und eine in dem Gehäuse (12) beinhaltete versiegelte Ampulle (14) umfasst, wobei die Ampulle (14) ein Ausgangsmaterial enthält, das sich bei Aktivierung durch einen Neutronenfluss in ein Radioisotop umwandelt, und wobei diese Ampulle (14) mittels eines stoßabsorbierenden Materials (24) in dem Gehäuse (12) gehalten wird, **dadurch gekennzeichnet, dass** das Gehäuse (12) aus einem Kunststoffmaterial gefertigt ist.

2. Patrone (10) nach Anspruch 1, wobei das Gehäuse (12) aus einem Kunststoffmaterial gefertigt ist, das ausgewählt ist aus der Gruppe, bestehend aus Polyethylen, Polyetheretherketon (PEEK), Polyurethan, Polyamid, Polycarbonat oder Polypropylen, vorzugsweise Polyethylen oder PEEK.

3. Patrone (10) nach Anspruch 1 oder 2, wobei die Patrone (10) eine Berylliumauskleidung oder -beschichtung umfasst.

4. Patrone (10) nach einem der vorherigen Ansprüche, wobei die Ampulle (14) eine versiegelte Glasampulle ist.

5. Patrone (10) nach einem der vorherigen Ansprüche, wobei das stoßdämpfende Material (24) ein isolierendes Material, vorzugsweise ein Schaum- oder Fasermaterial, umfasst.

6. Patrone (10) nach Anspruch 5, wobei das Isoliermaterial expandierten Polystyrolschaum, Harnstoff-Formaldehyd-Schaum, Polyurethanschaum, Kautschukschaum, Glaswolle, Mineralwolle, Zellulosefasern und andere Naturfasern, Glasfaserfüllungen oder Kombinationen davon umfasst.

7. Patrone (10) nach einem der vorherigen Ansprüche, wobei das stoßdämpfende Material (24) eine flexible Struktur (26) aus einem elastischen Material umfasst, die sich an gegenüberliegenden Enden der Ampulle (14) befindet.

8. Patrone (10) nach Anspruch 7, wobei die flexible Struktur (26) mit einem mittleren Loch (32) zum Aufnehmen eines vorderen Endes (28) oder eines hinteren Endes (30) der Ampulle (14) versehen ist.

9. Patrone (10) nach einem der vorherigen Ansprüche, wobei die Patrone (10) ferner ein magnetisches Material oder eine magnetische Beschichtung beinhaltet.

10. Patrone (10) nach einem der vorherigen Ansprüche, wobei das Gehäuse (12) einen ersten Teil (18) und einen zweiten Teil (20) aufweist, die lösbar aneinander angebracht sind.

11. Verfahren zum Herstellen von Radioisotopen in einem Schwerwasserkernreaktor aus einem Bestrahlungsziel, wobei das Bestrahlungsziel in Form einer Patrone (10) nach einem der Ansprüche 1 bis 10 bereitgestellt ist, wobei das Verfahren die folgenden Schritte umfasst:
Bereitstellen von mindestens einem Führungsrohr (102), das durch einen Moderator (104) im Kern des Kernreaktors führt;
Einführen eines oder mehrerer der Bestrahlungsziele in das Führungsrohr (102) und Aktivieren der Bestrahlungsziele durch Aussetzen des Bestrahlungsziels einem Neutronenfluss in dem Moderator (104) des Kernreaktors und Umwandeln des Ausgangsmaterials in den Bestrahlungszielen in ein Radioisotop, um ein oder mehrere aktivierte Bestrahlungsziele zu bilden;
Entnehmen des aktivierten Bestrahlungsziels aus dem Führungsrohr (102); und
Entladen des einen oder der mehreren aktivierten Bestrahlungsziele in einen Lagerbehälter (120);
wobei der Schritt des Einführens des einen oder der mehreren Bestrahlungsziele in das Führungsrohr (102) und des Herausnehmens des einen oder der mehreren aktivierten Bestrahlungsziele aus dem Führungsrohr (102) unter Verwendung eines pneumatischen Antriebssystems durchgeführt wird, und wobei der Schritt eines Entladens der Bestrahlungsziele in den Speicherbehälter (120) ein Abtrennen eines Teils des einen oder der mehreren aktivierten Bestrahlungsziele und Entladen nur dieses Teils des einen oder der mehreren Bestrahlungsziele in den Lagerbehälter (120) umfasst.

12. Verfahren nach Anspruch 11, wobei der Schritt eines Entladens der aktivierten Bestrahlungsziele beinhaltet, dass mindestens eines der aktivierten Ziel, vorzugsweise genau ein aktiviertes Bestrahlungsziel, in einer Trennanordnung gehalten wird, um das mindestens eine Ziel, vorzugsweise das eine Ziel, von der Restmenge der Ziele zu trennen und das mindestens eine Ziel, vorzugsweise das eine Ziel, in den Lagerbehälter auszustoßen.

13. Verfahren nach Anspruch 12, wobei die Trennanordnung ein erstes und ein zweites Verriegelungselement umfasst, die in einem vorbestimmten Abstand zueinander angeordnet sind, wobei das erste und das zweite Verriegelungselement ausgewählt sind aus der Gruppe eines Magneten oder Solenoids, eines magnetisch betätigten Schlosses, eines pneumatisch betätigten Schlosses und/oder eines mechanisch betätigten Schlosses.

14. Verfahren nach einem der Ansprüche 11 bis 13, wobei ein Strahlungsdetektor (130) an der Entladeeinheit installiert ist und wobei der Schritt eines Entladens der aktivierten Bestrahlungsziele ein Bestimmen der Abwesenheit oder Anwesenheit eines aktivierten Bestrahlungsziels in der Trennanordnung mittels des Strahlungsdetektors (130) umfasst.

## Revendications

1. Cartouche (10) destinée à être utilisée comme cible d'irradiation, dans laquelle la cartouche (10) comprend un boîtier (12) et une ampoule scellée (14) incluse dans ledit boîtier (12), dans laquelle l'ampoule (14) contient un matériau de base qui, lors de l'activation par un flux de neutrons, est converti en radio-isotope, et dans laquelle cette ampoule (14) est maintenue à l'intérieur dudit boîtier (12) au moyen d'un matériau d'absorption de chocs (24), **caractérisée en ce que** le boîtier (12) est fabriqué en matière plastique.

2. Cartouche (10) selon la revendication 1, dans laquelle le boîtier (12) est constitué d'une matière plastique choisie dans le groupe constitué par le polyéthylène, la polyéther-éther-cétone (PEEK), le polyuréthane, le polyamide, le polycarbonate ou le polypropylène, plus préférentiellement le polyéthylène ou la PEEK.

3. Cartouche (10) selon la revendication 1 ou 2, dans laquelle la cartouche (10) comprend une enveloppe ou un revêtement en béryllium.

4. Cartouche (10) selon l'une quelconque des revendications précédentes, dans laquelle l'ampoule (14) est une ampoule en verre scellée.

5. Cartouche (10) selon l'une quelconque des revendications précédentes, dans laquelle le matériau d'absorption de chocs (24) comprend un matériau isolant, de préférence un matériau en mousse ou en fibres.

6. Cartouche (10) selon la revendication 5, dans laquelle le matériau isolant comprend de la mousse de polystyrène expansé, de la mousse d'urée-formaldéhyde, de la mousse de polyuréthane, de la mousse de caoutchouc, de la laine de verre, de la laine minérale, des fibres de cellulose et d'autres fibres naturelles, des charges en fibre de verre, ou des combinaisons de celles-ci.

7. Cartouche (10) selon l'une quelconque des revendications précédentes, dans laquelle le matériau d'absorption de chocs (24) comprend une structure souple (26) en matériau élastique située à côté d'extrémités opposées de l'ampoule (14).

8. Cartouche (10) selon la revendication 7, dans laquelle la structure souple (26) est pourvue d'un trou central (32) pour recevoir une extrémité avant (28) ou une extrémité arrière (30) de l'ampoule (14).

9. Cartouche (10) selon l'une quelconque des revendications précédentes, dans laquelle la cartouche (10) comprend en outre un matériau ou un revêtement magnétique.

10. Cartouche (10) selon l'une quelconque des revendications précédentes, dans laquelle le boîtier (12) comporte une première partie (18) et une seconde partie (20) attachées l'une à l'autre de manière amovible.

11. Procédé de production de radio-isotopes dans un réacteur nucléaire à eau lourde à partir d'une cible d'irradiation, dans lequel la cible d'irradiation est fournie sous la forme d'une cartouche (10) selon l'une quelconque des revendications 1 à 10, dans lequel le procédé comprend les étapes consistant à :
fournir au moins un tube de guidage (102) traversant un modérateur (104) dans le coeur du réacteur nucléaire ;
insérer une ou plusieurs des cibles d'irradiation dans le tube de guidage (102) et activer les cibles d'irradiation en exposant la cible d'irradiation à un flux de neutrons dans le modérateur (104) du réacteur nucléaire et convertir le matériau de base dans les cibles d'irradiation en un radio-isotope, pour former une ou plusieurs cibles d'irradiation activées ;
récupérer la cible d'irradiation activée dans le tube de guidage (102) ; et
décharger les une ou plusieurs cibles d'irradiation activées dans un conteneur de stockage (120) ;
dans lequel l'étape d'insertion des une ou plusieurs cibles d'irradiation dans le tube de guidage (102) et de récupération des une ou plusieurs cibles d'irradiation activées dans ledit tube de guidage (102) est réalisée à l'aide d'un système d'entraînement pneumatique, et dans lequel l'étape de déchargement des cibles d'irradiation dans le conteneur de stockage (120) comprend la séparation d'une partie desdites une ou plusieurs cibles d'irradiation activées et le déchargement uniquement de ladite partie desdites une ou plusieurs cibles d'irradiation dans le conteneur de stockage (120).

12. Procédé selon la revendication 11, dans lequel l'étape de déchargement des cibles d'irradiation activées consiste à maintenir au moins une des cibles activées, de préférence exactement une cible d'irradiation activée, dans un dispositif de séparation pour séparer l'au moins une cible, de préférence la cible unique, du reste des cibles et éjecter l'au moins une cible, de préférence la cible unique, dans le conteneur de stockage.

13. Procédé selon la revendication 12, dans lequel le dispositif de séparation comprend un premier et un second élément de verrouillage disposés à une distance prédéterminée l'un de l'autre, dans lequel le premier et le second élément de verrouillage sont choisis dans le groupe constitué par un aimant ou un solénoïde, un verrou à commande magnétique, un verrou à commande pneumatique et/ou un verrou à commande mécanique.

14. Procédé selon l'une quelconque des revendications 11 à 13, dans lequel un détecteur de rayonnement (130) est installé sur l'unité de décharge, et dans lequel l'étape de décharge des cibles d'irradiation activées comprend la détermination de l'absence ou de la présence d'une cible d'irradiation activée dans le dispositif de séparation au moyen du détecteur de rayonnement (130).
